# EUROPEAN PATENT APPLICATION

(11) **EP 4 742 100 A1**
(43) Date of publication of application: **13.05.2026**
(21) Application number: 24306887.1
(22) Date of filing: 08.11.2024
(51) Int. Cl.: G06N 3/045, G06N 3/098, H04L 67/10, G06N 3/0464

(54) **METHOD TO MAP A SPLIT BRANCH NAME**

(71) Applicant: InterDigital CE Patent Holdings, SAS, 75017 Paris (FR)
(72) Inventor: QUINQUIS, Cyril, 35520 Melesse (FR); FILOCHE, Thierry, 35410 Chateaugiron (FR); ONNO, Stephane, 35760 Saint Gregoire (FR)
(74) Representative: Vossius & Partner Patentanwälte Rechtsanwälte mbB

(57) **Abstract**

In an example of a split inferencing method, a first endpoint obtains information describing a graph structure of a machine learning, ML, model with a plurality of nodes whose outputs are tensors, each tensor having an original branch name. The first endpoint obtains information indicating a split of the model into first and second sub-models. For at least one of the tensors that is an output of a node in the first sub-model, the first endpoint sends, to a second endpoint, information associating the original branch name of the first tensor with a replacement branch name. The first endpoint runs the first sub-model to obtain the first tensor, and it sends the first tensor to the second endpoint, the first tensor being identified by the replacement branch name. The second node may run the second sub-model using the first tensor as an input.

## Description

### BACKGROUND

The present disclosure relates to machine learning (ML) models. New uses for machine learning models are constantly being developed. As the usefulness of such models increases, the computational complexity of those models continues to grow. It may be difficult to implement a complete machine learning model entirely on one computing device, particularly where the computing device is consumer level user equipment. The present disclosure thus relates to techniques in which an ML model is implemented partly on one endpoint (such as user equipment, UE) and partly on another endpoint (which may be a network entity), referred to as split inferencing.

### SUMMARY

Briefly stated, in one embodiment, a method comprises: obtaining information describing a graph structure of a machine learning, ML, model, wherein the ML model has a plurality of nodes, each node having an output of at least one tensor, each tensor having an original branch name; obtaining information indicating a split of the ML model into at least a first sub-model and a second sub-model, each of the nodes being in one of the sub-models; for at least a first one of the tensors, the first tensor being an output of a node in the first sub-model, sending, to a second endpoint, information associating the original branch name of the first tensor with a replacement branch name; running the first sub-model to obtain the first tensor; and sending the first tensor to the second endpoint, wherein the first tensor is identified by the replacement branch name.

An apparatus according to some embodiments comprises one or more processors configured to perform at least: obtaining information describing a graph structure of a machine learning, ML, model, wherein the ML model has a plurality of nodes, each node having an output of at least one tensor, each tensor having an original branch name; obtaining information indicating a split of the ML model into at least a first sub-model and a second sub-model, each of the nodes being in one of the sub-models; for at least a first one of the tensors, the first tensor being an output of a node in the first sub-model, sending, to a second endpoint, information associating the original branch name of the first tensor with a replacement branch name; running the first sub-model to obtain the first tensor; and sending the first tensor to the second endpoint, wherein the first tensor is identified by the replacement branch name.

A method according to some embodiments comprises: obtaining information describing a graph structure of a machine learning, ML, model, wherein the ML model has a plurality of nodes, each node having an input of at least one tensor, each tensor having an original branch name; obtaining information indicating a split of the ML model into at least a first sub-model and a second sub-model, each of the nodes being in one of the sub-models; receiving, from a first endpoint, information associating at least one original branch name with a replacement branch name, the original branch name identifying an input to a node in the second sub-model; receiving a first tensor from the first endpoint, wherein the first tensor is identified by the replacement branch name; and running the second sub-model using the first tensor as an input to the node associated with the original branch name.

An apparatus according to some embodiments comprises one or more processors configured to perform at least: obtaining information describing a graph structure of a machine learning, ML, model, wherein the ML model has a plurality of nodes, each node having an input of at least one tensor, each tensor having an original branch name; obtaining information indicating a split of the ML model into at least a first sub-model and a second sub-model, each of the nodes being in one of the sub-models; receiving, from a first endpoint, information associating at least one original branch name with a replacement branch name, the original branch name identifying an input to a node in the second sub-model; receiving a first tensor from the first endpoint, wherein the first tensor is identified by the replacement branch name; and running the second sub-model using the first tensor as an input to the node associated with the original branch name.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 illustrates an architecture for a split inference between the UE (user equipment) and network, with the media data source in the UE.
FIG. 2 illustrates an architecture for a split inference between the UE (user equipment) and network, with the media data source in the network.
FIGs. 3A-3C illustrate a split inferencing model in which only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. a network). FIG. 3C illustrates the topology of the entire model (with names removed for clarity of illustration).
FIGs. 4A-4D illustrate an example of a split inferencing model with two connections. FIG. 4A illustrates Part I. FIG. 4B and 4C together illustrate Part II. FIG. 4D illustrates the complete model topology (with names removed for clarity of illustration).
FIG. 5 illustrates an architecture for performing split inference with masking method negotiation, transmission of mapping information and routing.
FIG. 6 is a call flow diagram illustrating an example of a negotiation phase performed in some embodiments.
FIG. 7 is a call flow diagram illustrating an example of an inference loop according to some embodiments.
FIG. 8 illustrates a mapping module used on a first endpoint in some embodiments.
FIG. 9 illustrates a routing module used on a second endpoint in some embodiments.
FIG. 10 is a functional block diagram illustrating an apparatus on which some embodiments may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

### Overview of Split Inferencing of a Trained Model

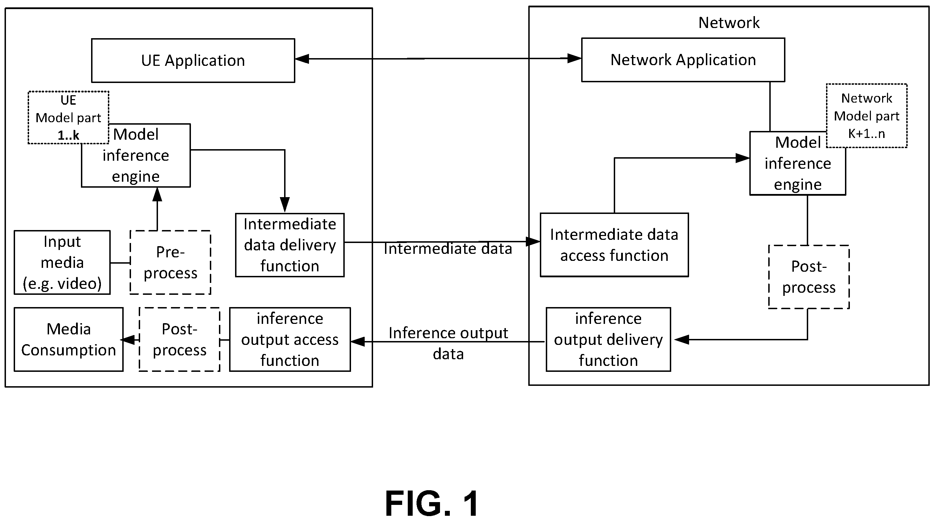

FIG. 1 provides an overview of an architecture (3GPP SA4 AI4media) for split inferences of a model composed of n layers or nodes (1..n) between the network and a user equipment (UE), where a first inference implemented on a first endpoint processes first part of the model, i.e. layers 1..k, and the second inference implemented on a second endpoint processes the second part of the model, i.e. layers k+1..n. The architecture shows the delivery and access functions of intermediate data between the UE and the network when the media data source originates from the UE. The first part of the inference is then performed in the UE and the second part in the network. The resulting output data is finally sent back to the UE.

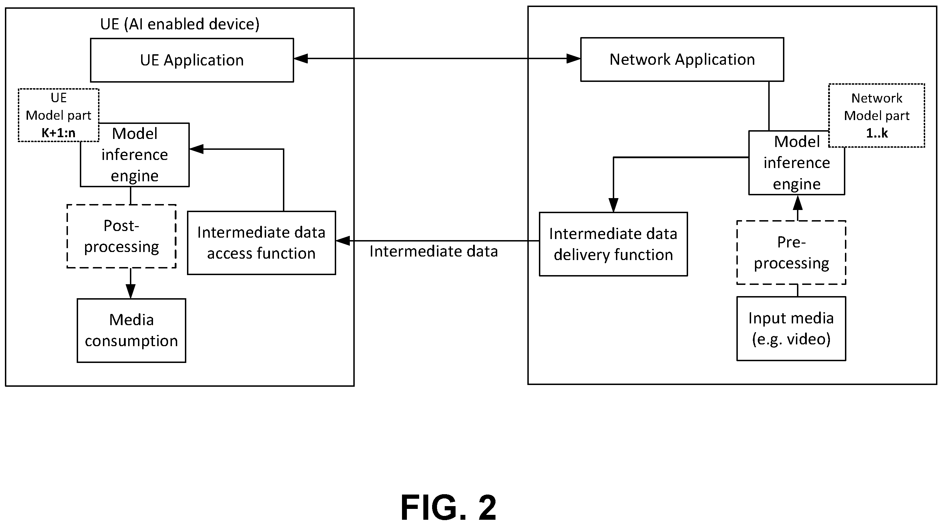

In another configuration, illustrated in FIG. 2, the media data source comes from the network, then the first part of the AI model is performed on the network side and the second part on the UE. Example embodiments herein may be implemented using either configuration.

A pre-processing is used to adapt the input media data to the input inference. Conversely, a post-processing is used to adapt the output results data of the inference to the media consumption.

In the present disclosure, the terms "layers" or "nodes" may be used interchangeably. Among those skilled in the art, the term "layers" is used more often in frameworks like Tensorflow, while "nodes" tends to be used with reference to the ONNX framework. The term "branch" refers to the entity that links two nodes or two layers e.g. the output of a node/layer A that is the input of node/layer B.

### Branch splitting

Artificial intelligence (Al) and/or machine learning (ML) model architectures have various different structures and different levels of complexity. A neural network can include thousand or millions of nodes. Each node is connected with at least another node. In case of multiple connections, the split operation applies on multiple branches. In case of a simple connection, the split operation applied on a single branch.

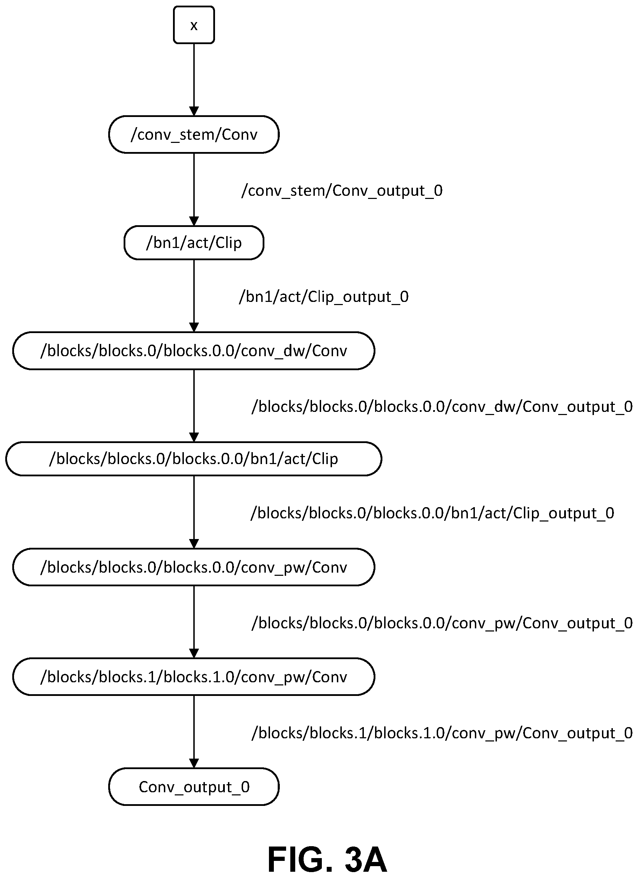

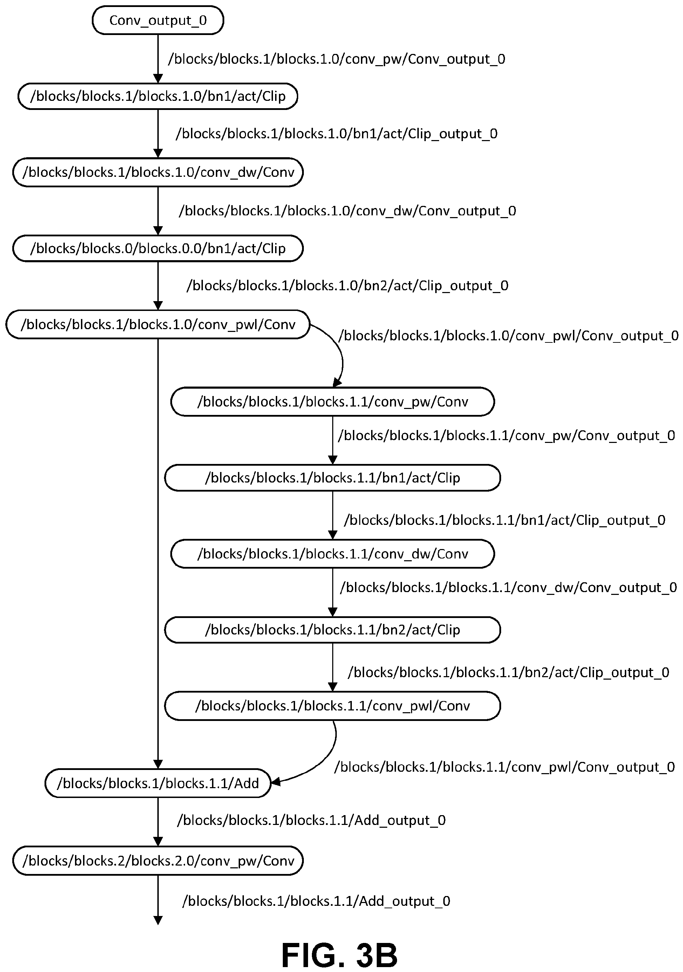

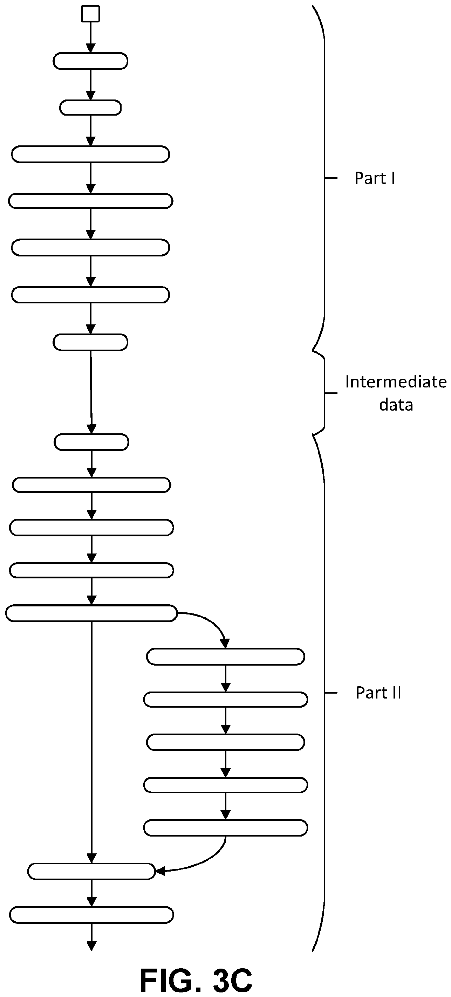

**Single-branch split.** FIGs. 3A-3C show a representation of the efficientnet_lite0_Opset16.onnx model which was split at the node numbered "node 10" in the numbering scheme of that model, where only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. Network). FIG. 3C illustrates the topology of the entire model (with names removed for clarity of illustration). The name of the "node 10" output is "/blocks/blocks.1/blocks.1.0/conv_pw/Conv_output_0" with short name "Conv_output_0". This branch name is used to identify the intermediate data which are sent from EndPoint1 (e.g. UE) to EndPoint2 (e.g. Network).

The intermediate data delivery function associates intermediate data with node I/O naming, e.g. "/blocks/blocks.1/blocks.1.0/conv_pw/Conv_output 0".

The intermediate data access function parses the intermediate data packet, retrieves the node I/O naming, e.g. branch "/blocks/blocks.1/blocks.1.0/conv_pw/Conv_output_0" and can route the intermediate data to the ad-hoc layer in the model inference engine.

**Multibranch split.** For some models, or some parts of a model, a node is connected to several nodes for its input, and/or several nodes for its output. A split made at a such node is called a multibranch split. The result is several tensors that encapsulate intermediate data.

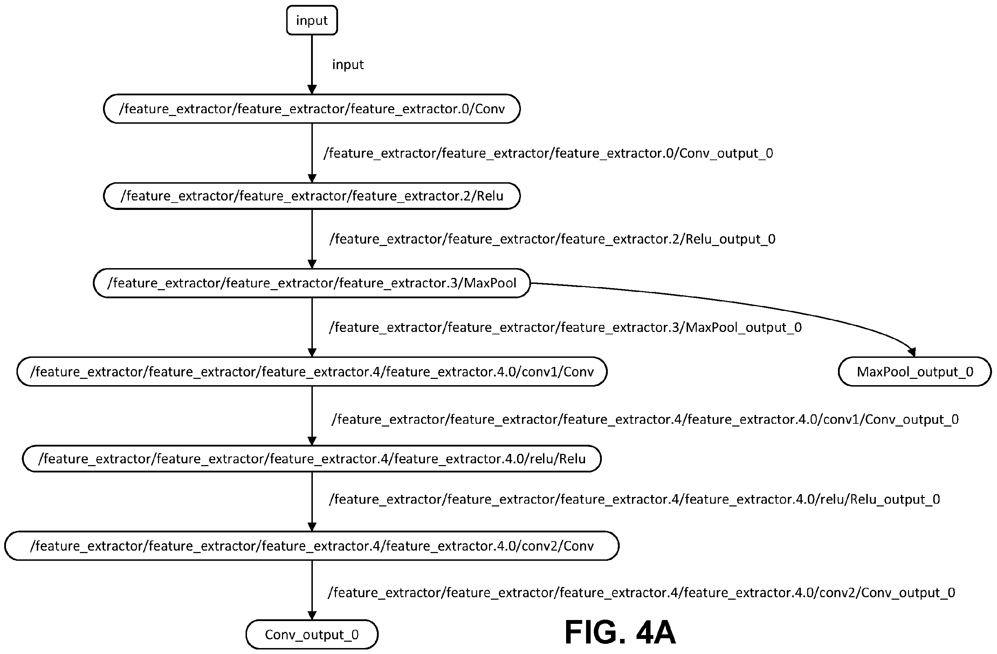

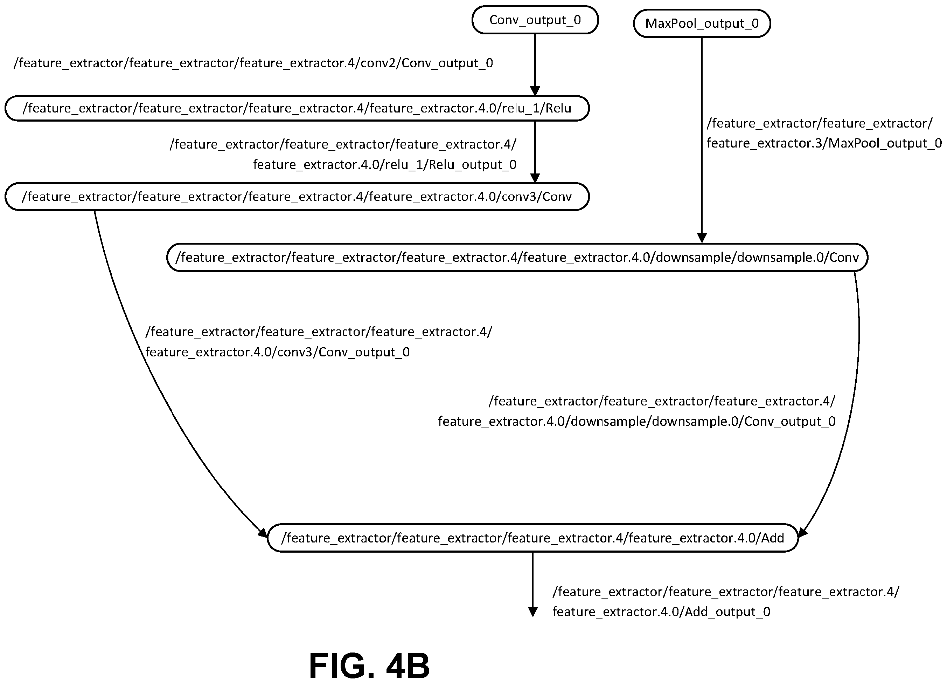

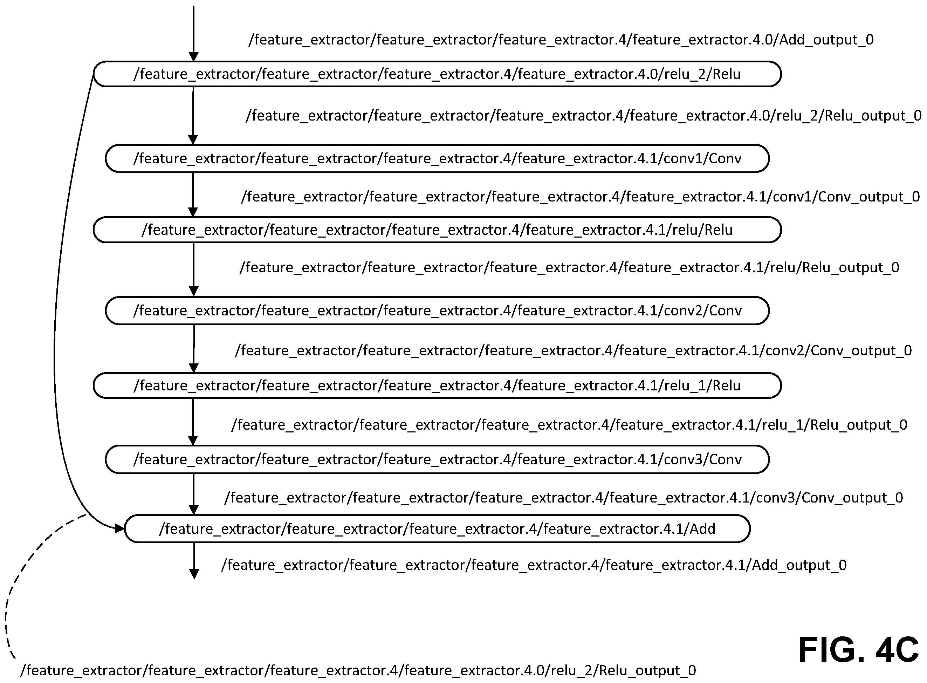

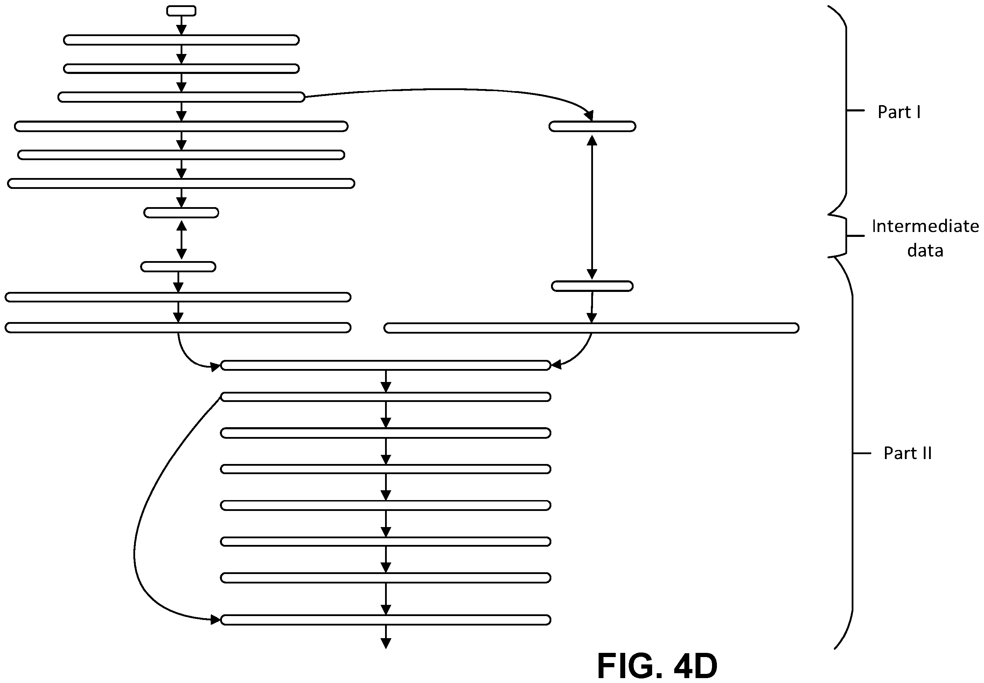

FIGs. 4A-4D illustrate an example of the resnet model split at node 6 into Part I and Part II. FIG. 4A illustrates Part I. FIG. 4B and 4C together illustrated Part II. FIG. 4D illustrates the complete model topology (with names removed for clarity of illustration). The split is made of two branches:
- one branch from "node 6"
   ("/feature_extractor/feature_extractor/feature_extractor.4/feature_extractor.4.0/conv2 /Conv") to node 7 with branch name
   "/feature_extractor/feature_extractor/feature_extractor.4/feature_extractor.4.0/conv2/ Conv_output_0"",
- and one branch from "node 3"
   (7feature_extractor/feature_extractor/feature_extractor.3/MaxPool") to "node 9" with branch name
   "/feature extractor/feature extractor/feature_extractor.3/MaxPool output 0".

Tensors and intermediate data are conventionally identified with the branch naming, ["/feature extractor/feature extractor/feature_extractor.4/feature_extractor.4.0/conv2/Conv_ output_0" , "/feature extractor/feature_extractor/feature extractor.3/MaxPool_output 0"].

The intermediate data delivery function combines intermediate data with branch naming.

The intermediate data access function parses the intermediate data packet, retrieves the branch naming and can route the intermediate data to the EndPoint2.

In the present disclosure, the term branch refers to the link between two nodes or between two layers. The term edge may also be used to refer to a branch. The branch is the output of a node. Intermediate data are the data transmitted from one or more node outputs to one or more node inputs when one or more branches are cut. Intermediate data may be structured in tensors. Tensors have a tensor name (or other identifier), tensor dimension or shape, tensor type and tensor value. Tensors and corresponding branches may have a name such as "/blocks/blocks.4/blocks.4.2/conv_dw/Conv_output 0." Tensors can have different dimensions or shapes; an example tensor dimension or shape is [1,672,14,14], Tensors can have different data types; an example tensor type is float32. Tensor dimension or shape also defines the intermediate data size, i.e. the amount of intermediate data transmitted from one endpoint to another.

### Overview of the ONNX format

ONNX is an open format built to represent machine learning models. ONNX defines a common set of operators - the building blocks of machine learning and deep learning models - and a common file format to enable AI developers to use models with a variety of frameworks, tools, runtimes, and compilers.

ONNX may be used to describe a computational graph. The model itself is organized in graph, in a tree-like way (e.g. an ONNX model may be load as onnx_model = onnx.load(onnx model_name)).

Inputs of a model are available as a list of string (e.g. onnx_model.graph.input).

Outputs of a model are available as a list of string (e.g. onnx_model.graph.output).

Each machine learning operation is represented by a "node".

All nodes are available through a list (e.g. onnx_model.graph.node)

Each node has following properties:
- node.name: a string that identifies this node
- node.input: a list of string that represent tensor name expected by the node
- node.output: a list of string that represent tensor name generated by the node
- node.op_type: a string that identifies the operation of the node

Running an inference with an ONNX model conventionally involves passing a dictionary containing the association tensor name / tensor value, such as the following example, in which the tensor names are the names of the input tensors of the model.

```
 { «tensor_name_1»: tensor_value_1,
 «tensor_name_2»: tensor_value_2,
 «tensor_name_n»: tensor_value_n
 }
```

### Overview of issues addressed in some embodiments

An application running on a UE (user equipment) may make use of an artificial intelligence (Al) and/or machine learning (ML) model M to infer pictures, videos, texts, or audio sequences. For some reasons, like local constraints on memory and/or energy limitations, it may be desirable for the inference process to be distributed between an EndPoint1, which may be the UE, and an EndPoint2, which may be an endpoint on the network. In this case, on EndPoint1 the application downloads or otherwise obtains a sub-model M1 which is a subpart of M, while EndPoint2 (Network) downloads or otherwise obtains the corresponding sub-model M2. M1 and M2 have at least one input and at least one output.

M1 and M2 are two sub-models that constitute model M. By working together, they mimic the M inference process in the sense that they provide the same functionality with the same results in terms of accuracy or score.

The inference is distributed between EndPoint1 and Endpoint2 where M1 and M2 sub-models have been respectively downloaded. Intermediate data from the M1 inference results are communicated to EndPoint2 where M2 finalizes the inference process. In a conventional solution, intermediate data is communicated by transmitting tensor names, tensor dimensions or shapes, tensor data types, tensor compression algorithm profile identifier and tensor values. One or more of the following problems may arise with the use of this conventional solution.
- If the entity (this can be the application running on the EndPoint or the MNO itself) that manages/operates the AI/ML sub-model on EndPoint1 renames AI/ML model branches for customization purposes, masking, or anonymizing the original branch name, the EndPoint2 will not be able to associate this unknown branch name with the destination branch of the sub-model.
- Tensor names have often a long size due to complex naming conventions used at the conception of the model, or during the automatic conversion of the model from the original framework (e.g. tensorflow, pytorch, ...) to ONNX framework. (e.g. StatefulPartitionedCall/StatefulPartitionedCall/dense/StatefulPartitionedCall/MatMul:0 , /feature_extractor/feature_extractor/feature_ extractor.3/MaxPool) that may unnecessarily slow down the transmission of intermediate data.
- Tensor names may contain special characters like "f", "\" that may generate some troubles for interoperability between various operating system.

Thus, example embodiments address one or more of the following issues.
- Masking the tensor information (name, data type, dimension) transmitted between the two endpoints.
- Renaming the tensors information (name) on one endpoint and communicating this renaming to the other endpoint.
- Finding a way to mask the number of tensors exchanged between the two endpoints.

### Overview of example embodiments

Example embodiments provide systems and methods for creating mapping tables so that two endpoints with different branch names for a same split point can associate intermediate data from a source to a destination branch. In some embodiments, a signalling message is transmitted from source endpoint to destination endpoint to signal that mapping table is used to decode the branch name. Some embodiments include a negotiation phase to create and transmit the first mapping table based on the negotiated split point. Then, during an inference loop phase, the split point may change for different reasons which can call for the transmission of a new mapping. The mapping can be transmitted for many other reasons as determined by the endpoints.

In an example embodiment, at a first endpoint, the original split branch name is renamed/masked. This renaming may be a renaming or a hash of the original split branch name, with a constraint to ensure the uniqueness of the branch name. This renaming function may be performed by a module called "mapping module". The mapping module generates a mapping table that contains the original split branch name and the corresponding new name. The mapping table may also contain additional metadata like tensor dimension, tensor data type and tensor compression algorithm profile identifier in the case where these data are not transmitted. The mapping module generates also a mapping usage information which indicates to the second endpoint whether or not a mapping table is used to decode the received branch name.

In an example negotiation phase, both endpoints agree on a split point, a new branch name is applied for this split point, and a mapping table is created and transmitted to the second endpoint. In an example inference loop phase, the inference process is in progress. Intermediate data are transmitted with the renamed/masked branch from EndPoint1 to EndPoint2. A mapping usage information is also transmitted to signal whether the branch name is changed/masked, indicating whether a mapping table should be used to decode the masked branch name. At runtime, for different reasons, e.g. a new policy or a new split point, the mapping table changes or shall be updated, this new version shall be transmitted to the second endpoint. If needed, mapping usage information shall be updated as well. The receiver endpoint can then associate the incoming intermediate data with the original branch name thanks to the mapping table that it received previously and route these data towards the ad-hoc branch of the sub-model. The inference can then be finalized.

In an example embodiment, a first endpoint creates a mapping table that is transmitted to the second endpoint that receives it and stores it in memory.

The first endpoint generates a signalling message to the second endpoint to inform that a mapping table is to be used to decode the branch name parameter associated to the next incoming intermediate data (e.g. tensor data).

The second endpoint receives the intermediate data. If a mapping table is used to decode the branch name, then the second endpoint uses it by parsing the mapping table with the renamed/masked branch. When the renamed/masked branch matches one entry of the mapping table, it stops parsing the table and fetches the associated metadata like the tensor dimension, the tensor data type, tensor compression algorithm profile identifier and if needed the hash method.

Tensor metadata may include information such as tensor dimension, the tensor data type and tensor compression algorithm profile identifier, among other possibilities.

In operation, the original branch name is decoded and the intermediate data, such as tensor data, can then be routed towards the ad-hoc input layer (branch) of the sub-model. The inference process can then be completed.

Example embodiments include a negotiation step and an inference loop step, described in further detail below.

### Architecture and Procedures

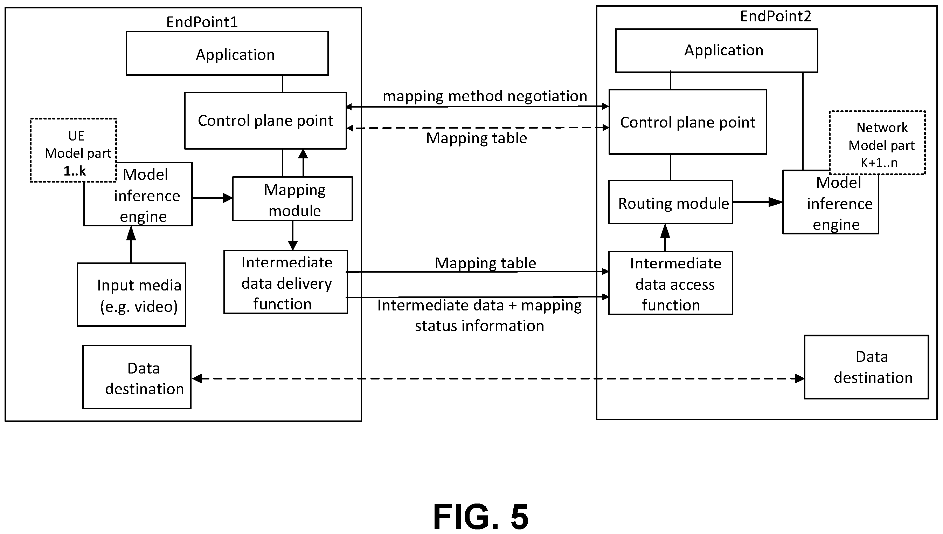

FIG. 5 illustrates an architecture for performing split inference with masking method negotiation, transmission of mapping information and routing.

In some embodiments, prior to running the inference, both endpoints operate to agree on certain parameters. One such parameter is the split point, which is the layer or node where the inference ends on EndPoint1 and where it starts on EndPoint2.

The generated intermediate data from EndPoint1 are associated with an identifier which identifies their original branch on EndPoint1 and their destination branch on EndPoint2. This identifier is the name of branch. This parameter is particularly useful in case of multibranch split since intermediate data from different origins are routed towards multiple destinations.

On EndPoint1, the original branch name of the negotiated split point is changed/masked. A mapping table is created and transmitted to the EndPoint2. This negotiation may be performed through the control plane.

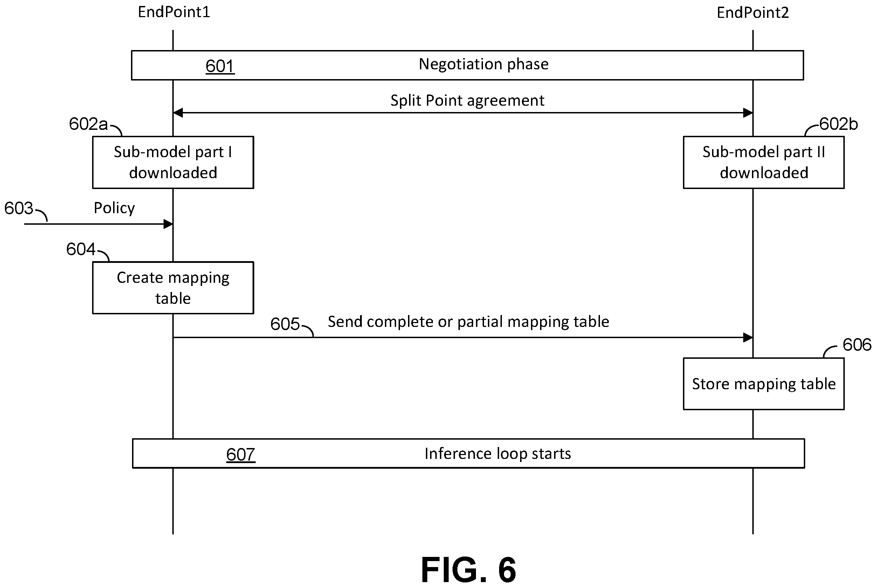

FIG. 6 illustrates an example of a negotiation phase performed in some embodiments. At 601, the negotiation phases has started and both parties, EndPoint1 and EndPoint2 have agreed on a SplitPoint. At 602a, EndPoint1 downloads or otherwise obtains sub-model Part I, and at 602b, EndPoint2 downloads or otherwise obtains sub-model Part II. At 603, the mobile network operator (MNO) or content provider or AI/ML model manager may set a policy for the mapping table generation. At 604, based on this policy, a mapping table (complete or partial) is created from the AI/ML model and the negotiated split point. At 605, the complete or partial mapping table is sent to EndPoint2. At 606, EndPoint2 receives this mapping table and stores it in memory. At 607, the inference loop starts.

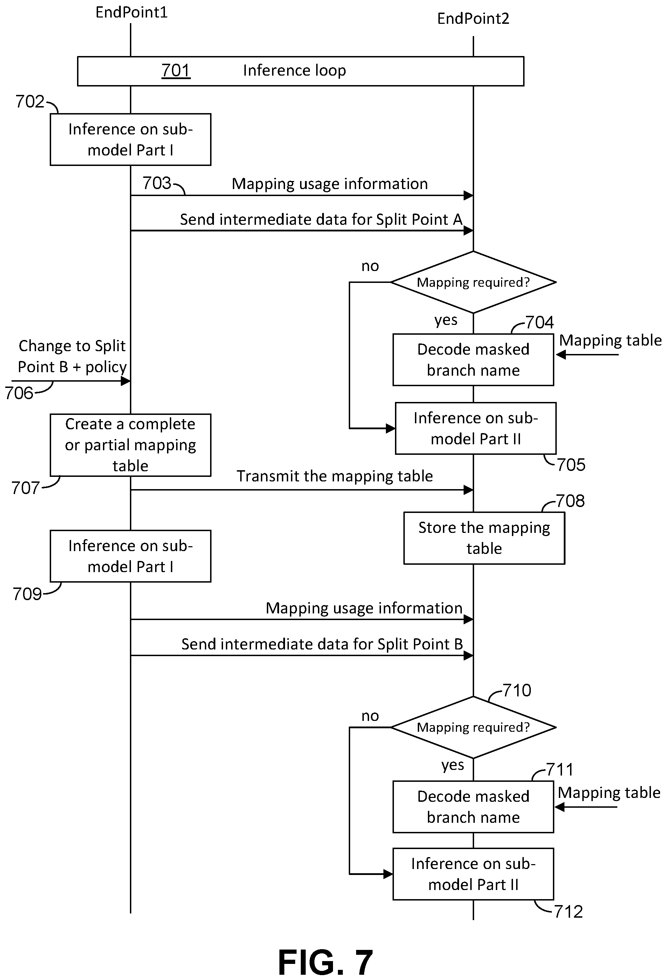

FIG. 7 depicts the inference loop according to some embodiments. This is the phase during which the inference process runs, and intermediate data are sent from EndPoint1 to EndPoint2. During this phase, the split point or the renaming policy can change, in which case the mapping table is updated, and the updated mapping table is transmitted to EndPoint2.

At 701, the inference loop is running, and intermediate data are sent from EndPoint1 to EndPoint2. At 702, on EndPoint1, the inference process is applied on sub-model Part I and generates intermediate data for Split Point A associated with mapping usage information indicating that a mapping table is used to decode the branch name. Mapping usage information is transmitted to EndPoint2. Intermediate data for Split Point A are transmitted to EndPoint1. At 703, on EndPoint2, mapping usage information is received and decoded. A test is performed to determine whether a mapping table is used to decode the branch name. At 704, the branch name is decoded by using the mapping table. At 705, intermediate data are routed to the ad-hoc branch of the sub-model Part II to finalize the inference. At 706, on EndPoint1, the split point changes from A to B and/or a new policy is transmitted. At 707, a new complete or partial mapping table is created based on the new split point and the new policy which tells that tensor metadata are also masked and not transmitted. The new complete or partial mapping table is sent to EndPoint2. At 708, the new complete or partial mapping table is stored in memory.

In another embodiment, when several mapping tables have already been exchanged or configured, EndPoint1 may transmit an identifier of the mapping table to be used among the already transmitted or configured or stored mapping tables. This identifier uniquely identifies each mapping table that maps the tensor identifier with the original tensor name. This information may be transmitted with the mapping table.

At 709, the inference process is performed on sub-model Part I, now with Split Point B, and generated intermediate data are transmitted with new mapping usage information. At 710, mapping usage information is decoded and test is performed to determine whether a mapping table is required. At 711, the branch name is decoded by using the new complete or partial mapping table. At 712, intermediate data are routed to the ad-hoc branch of sub-model Part II, which finalizes the inference.

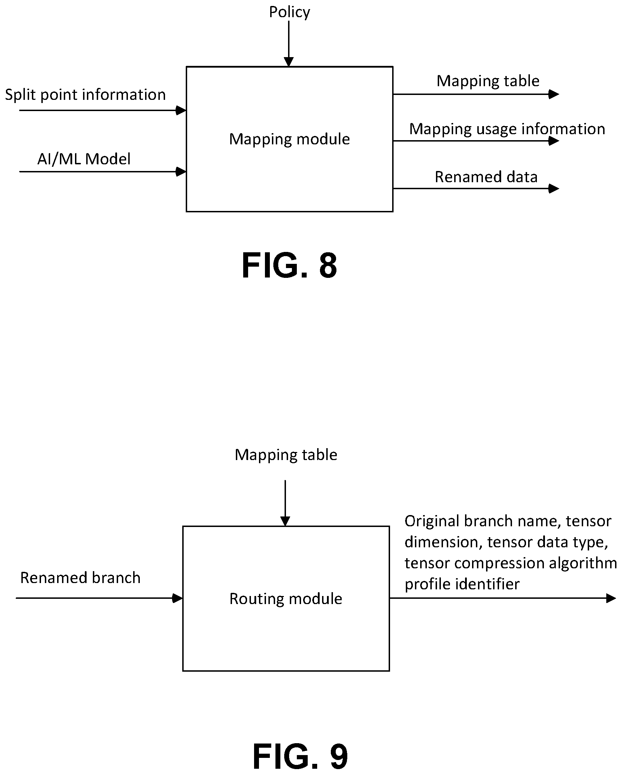

In some embodiments, a mapping module as illustrated in FIG. 8 is present on EndPoint1 and may take the following as input: split point information, the AI/ML model (the full model or a part of it, such as a sub-model), and a policy parameter. It computes this information and generates a mapping table, a mapping usage information and renamed data. The split point information may include original branch name and tensor metadata. The AI/ML model may be the full AI/ML model or the sub-model, a partition of the full model.

The policy may be managed by the AI/ML model manager which can be a Mobile Network Operator (MNO) or a content provider. The policy may indicate whether the mapping table is created for the whole AI/ML model, e.g., for all the split points of the model, for some candidates split points or for one specific split point. The policy may also identify the method that is used to rename (or mask) the branch name. These methods may include a complete renaming of the original name, e.g. to compress/shorten the name, a partial renaming with additional prefix or suffix to the original name, or a hash of the original name, among other options.

In an example embodiment, mapping usage information is sent to the intermediate data delivery function in order to be transmitted to the second endpoint. Mapping usage information specifies the status of the mapping, e.g. whether or not a mapping table is used to decode the branch name. The mapping may be described as a function applied on the branch name. In some cases, other information like tensor metadata may not be transmitted and may instead be part of the mapping table.

In some embodiments, the mapping usage information may be encoded as described in Table 1.

**Table 1: Mapping usage information**

| **Mapping usage information** | **Description** | **Mapping table used** |
|---|---|---|
| 0 | Clear (no mask or renaming) | no |
| 1 | Renaming (or masking) of branch name | yes |
| 2 | Renaming (or masking) of branch name and tensor metadata | yes |

Note that in some cases, the second endpoint receives a mapping table and stores it in memory but never uses it because the mapping usage information indicates that no mapping table is required and that all branch information is transmitted.

As depicted in FIG. 5, a mapping table is sent to the intermediate data delivery function or to the Control Plane Point.

Different types of mapping tables may be used in different embodiments. For example, in some cases, complete mapping tables are used, and in other cases, partial mapping tables are used.

In the case of a complete mapping table, the mapping table is created for all the branches of the AI/ML sub-model. In this case, all the possible splittable branches of all the possible split points are selected. The complete mapping table comprises the original branch name, the renamed (or masked) branch name, and the tensor metadata for each original branch. The two last parameters are optional and depend on the chosen policy. An example of such a table is provided in Table 8 below.

In the case of a partial mapping table, a mapping table may be created for one or more specific split points of the AI/ML sub-model. The entity that manages the AI/ML model (which can be a mobile network operator or a content provider) and the way it is processed may decide for many different reasons to select only one split point or only a specific range of split points. This decision may be transmitted to the mapping module through the policy parameter. The partial mapping table may be created dynamically in response to new intermediate data being generated by the model inference engine. The partial mapping table may be linked to the intermediate data (e.g. tensor data) and transmitted to the intermediate data delivery function. In some embodiments, a policy is implemented such that this table is transmitted only once, e.g. after selection of the split point. Examples of partial mapping tables are provided in Tables 3-7 and 9, below.

In some embodiments, a complete mapping table or partial mapping table may be transmitted out-of-band to the second endpoint.

In some embodiments, a complete mapping table or partial mapping table may be transmitted whenever it is decided by the operator or content provider. The operator or content provider may determine when or how often to share the complete mapping table based on the understanding that the complete mapping table may be much bigger in size than a partial mapping table.

In some embodiments, mapping tables may be fetched out-of-band using a URL that points to a server associated to a database containing mapping tables. The URL can be delivered in the control plane.

In some embodiments, mapping tables can be exchanged through a trusted third party.

Renamed data corresponds to the new name to be applied on the split branch. Renamed data substitutes the original branch name and can also replace tensor metadata. The renaming method may employ a replacement name or a hashing of the original name. The renaming may be performed in a way that ensures the uniqueness of the split branch naming.

Renaming of a branch, creating a new name for the split branch, may also be referred to as masking, as it obfuscates the identity of the branch. This function can be implemented internally or externally to the mapping module.

Table 2 provides examples of different possibilities for renaming/masking the original split branch name. The original split branch name can be renamed with a completely new renaming or by adding a suffix or a prefix to the original name or by compressing the original name or by removing special characters in the original name. This list is not exhaustive.

Some embodiments hash the original branch name with hash method that may be defined in the mapping table, so that the receiver endpoint can check the integrity of the transmitted renamed/masked name by performing a hash of the original branch name. This allows for detection of errors that may occur during the transmission of the information.

Table 2 also indicates which information is transmitted to decode a renamed/masked data.

**Table 2: renaming methods**

| **Renaming/masking method** | **Applied on** | **Transmitted information** | |
|---|---|---|---|
| | | **Mapping usage information** | **Mapping table** |
| No renaming | Not Applicable | 0 | no |
| substitution | Split branch name | 1 | yes |
| substitution | Split branch name + tensor metadata | 2 | yes |
| hashing | Split branch name | 1 | yes |
| hashing | Split branch name + tensor metadata | 2 | yes |

FIG. 9 illustrates an example of a routing module located on the second endpoint. The routing module operates to decode the original branch name based on the renamed/masked branch name and the mapping table.

In this example, the routing module receives two types of information. First is a renamed branch which is associated with each incoming packet that contains the intermediate data. Second is a mapping table. The mapping table may be received dynamically out-of-band and/or just before intermediate data are transmitted or when the connection between both endpoints was established and split point negotiated. The routing module parses the mapping table with the renamed branch. When an entry matches the name, it extracts the associated information.

In the embodiment of FIG. 9, the extracted information includes the original branch name, the tensor metadata (optional, depending on the policy), and the renaming method. Where tensor metadata is provided, it may include information such as tensor dimension, tensor data type, and tensor compression algorithm profile identifier.

In a case where the renaming/masking method is a substitution method, then original branch name is associated to the incoming intermediate data and routed towards the ad-hoc input branch of the sub-model. In a case where the masking method is hashing, then the branch routing module may apply the same hash function to the original branch name and thus check the integrity of the masked branch name. Then, intermediate data are routed towards the ad-hoc input branch of the sub-model.

### Examples of mapping tables

This section contains examples of mapping tables that are generated by the mapping module. The policy informs the mapping module on the method to apply for renaming the branch name. It also indicates which other information shall be masked or not, such as tensor metadata. The policy also indicates for which split point(s) the mapping table is generated.

The following examples are based on the existing AI/ML model efficientnet_lite_Opset16.onnx. In these examples, split point information is given as an indicative information in the mapping table. This information is redundant with branch name information but can be used to check and validate the branch name.

**Substitution.** Table 3 is an excerpt of a mapping table that could be sent in some embodiments. The applied method is a substitution of the original branch name. In this example, "/blocks/blocks.4/blocks.4.2/conv_dw/Conv_output 0" is renamed as Branch_A. Branch_A is a unique label in the mapping table, so that each original branch is identified without any ambiguity.

**Table 3: renamed/masked branch name with substitution**

| **Split point** | **Original branch name** | **Renaming /Masking method** | **Masked branch name** |
|---|---|---|---|
| 100 | /blocks/blocks.4/blocks.4.2/conv_dw/Conv_output_0 | Substitution | Branch_A |
| | /blocks/blocks.4/blocks.4.1/Add_output_0 | Substitution | Branch_B |

Intermediate data may be sent with "Mapping usage information"=1 (i.e. renamed branch only).

In the example of Table 4, the masked branch name is an index. The index may correspond to the rank of the tensor in the AI/ML model. It should be noted that the term "rank" used herein refers to the ordinal position of a tensor (e.g. first, second, third etc.) among the tensors used in a model, rather than the tensor rank in the sense of tensor rank decomposition as used in linear algebra.

**Table 4: renaming using substitution with index**

| **Original branch name** | **Renaming /Masking method** | **Masked branch name** |
|---|---|---|
| /blocks/blocks.4/blocks.4.2/conv_dw/Conv_output 0 | Substitution | 10 |
| /blocks/blocks.4/blocks.4.1/Add_output_0 | Substitution | 11 |

Intermediate data may be sent with "Mapping usage information"=1 (i.e. renamed branch only).

**Renaming with hashing.** Table 5 is an excerpt of a mapping table that could be sent in some embodiments. The applied method uses a hash function. A hash function is applied to the original branch name. in this example, "/blocks/blocks.4/blocks.4.2/conv_dw/Conv_output 0" becomes 078db9f8e93fe18269e3ad8fd631f83 by using the md5sum tool.

Hashing the branch name helps to ensure that the masked name is unique. The endpoint receives the intermediate data with the renamed branch. It transmits the renamed branch to the routing module which parses the mapping table, retrieves the original branch name and associates the intermediate data with this original branch name.

Hash methods can be for example md5sum, sha-1, or sha-256, among others. The hash method may be defined in the mapping table.

**Table 5: renamed/masked branch name with hashing**

| **Split Point** | **Original branch name** | **Renaming/ Masking** method | **Hash method** | **Renamed/Masked branch name** |
|---|---|---|---|---|
| 100 | /blocks/blocks.4/blocks.4.2/ conv_dw/Conv_output_0 | hashing | md5sum | d078db9f8e93fe1826 9e3ad8fd631f83 |
| | /blocks/blocks.4/blocks.4.1/ Add_output_0 | hashing | md5sum | tbt83631abe84a1120 bb8ba64b167490 |

Intermediate data may be sent with "Mapping usage information"=1 (renamed branch only).

**Branch name and tensor information masking.** Table 6 is an excerpt of a mapping table that could be sent. The applied renaming method is a substitution. The mapping table contains the original name but also the tensor metadata.

**Table 6: mapping table with name and tensor information**

| **Split Point** | **Original branch name** | **Renaming/ Masking method** | **Tensor metadata** | **Renamed/ Masked branch name** |
|---|---|---|---|---|
| 100 | /blocks/blocks.4/blocks.4.2/ conv_dw/Conv_output_0 | Substitution | [1,672,14,14], float32, FCM high 5.1 | Branch_A |
| | /blocks/blocks.4/blocks.4.1/ Add_output_0 | Substitution | [1, 112, 14, 14] , float32, FCM high 5.1 | Branch_B |

Intermediate data will be sent with "Mapping usage information"=2 (renamed/masked branch and tensor metadata).

Branch name renaming/masking with dynamic tensor dimension. Table 7 is an excerpt of an example mapping table that could be sent in some embodiments. The applied renaming method is a substitution method. The mapping table contains the original name and the tensor metadata with the tensor dimension that is not defined because the value is dynamic.

**Table 7: mapping table with dynamic tensor dimension**

| **Split Point** | **Original branch name** | **Renaming/ Masking method** | **Tensor metadata** | **Renamed/ Masked branch name** |
|---|---|---|---|---|
| 100 | /blocks/blocks.4/blocks.4.2/ conv_dw/Conv_output_0 | Substitution | [A, W, H, I], float32, FCM high 5.1 | Branch_A |
| | /blocks/blocks.4/blocks.4.1/ Add_output_0 | Substitution | [A, W, H, I] , float32, FCM high 5.1 | Branch_B |

Intermediate data will be sent with "Mapping usage information"=2 (renamed/masked branch and tensor metadata)

**Complete mapping table.** Table 8 is an example of an excerpt of a complete mapping table. This table has been created from an efficientnet model efficientnet_lite0_Opset16.onnx, following the ONNX format.

This table contains all the information for a renamed/masked branch. This information includes the original branch name and tensor metadata. For the sake of clarity, the method chosen in this example is "substitution".

**Table 8: complete mapping table**

| **Split Point** | **Original branch name** | **Renaming/ Masking method** | **Tensor metadata** | **Renamed/ Masked branch name** |
|---|---|---|---|---|
| 1 | /conv_stem/Conv_output_0 | Substitution | [1,32,112,112], float32, FCM high 5.1 | Branch_1 |
| 2 | /bn1/act/Clip_output_0 | Substitution | [1,32,112,112] , float32, FCM high 5.1 | Branch_2 |
| 3 | /blocks/blocks.0/blocks.0.0/ conv_dw/Conv_output_0 | Substitution | [1,32,112,112] , float32, FCM high 5.1 | Branch_3 |
| 4 | /blocks/blocks.0/blocks.0.0/ bn1/act/Clip_output_0 | Substitution | [1,32,112,112] , float32, FCM high 5.1 | Branch_4 |
| 5 | /blocks/blocks.0/blocks.0.0/ conv_pw/Conv_output_0 | Substitution | [1,16,112,112] , float32, FCM high 5.1 | Branch_5 |
| 6 | /blocks/blocks.1/blocks.1.0/ conv_pw/Conv_output_0 | Substitution | [1,96,112,112] , float32, FCM high 5.1 | Branch_6 |
| 7 | /blocks/blocks.0/blocks.0.0/ bn1/act/Clip_output_0 | Substitution | [1,32,112,112] , float32, FCM high 5.1 | Branch_7 |
| 8 | /blocks/blocks.1blocks.1.0/ conv_dw/Conv_output_0 | Substitution | [1,96,56,56] , float32, FCM high 5.1 | Branch_8 |
| 9 | /blocks/blocks.1/blocks.1.0/ bn2/act/Clip_output_0 | Substitution | [1,96,56,56] , float32, FCM high 5.1 | Branch_9 |
| 10 | /blocks/blocks.1/blocks.1.0/ conv_pwl/Conv_output_0 | Substitution | [1,24,56,56] , float32, FCM high 5.1 | Branch_10 |
| ... | ... | | ... | ... |
| 496 | /blocks/blocks. 6/blocks.6.0/ conv_pwl/Conv_output_0 | Substitution | [1,320,7,7] , float32, FCM high 5.1 | Branch_496 |
| 498 | /conv_head/Conv_output_0 | Substitution | [1,1280,7,7] , float32, FCM high 5.1 | Branch_497 |
| 498 | /bn2/act/Clip_output_0 | Substitution | [1,1280,7,7] , float32, FCM high 5.1 | Branch_498 |
| 499 | /global_pool/pool/ GlobalAveragePool_output_0 | Substitution | [1,1280,1,1] , float32, FCM high 5.1 | Branch_499 |
| 500 | /global_pool/flatten/ Flatten_output_0 | Substitution | [1,1280] , float32, FCM high 5.1 | Branch_500 |

Intermediate data will be sent with "Mapping usage information"=2 (renamed/masked branch and tensor metadata).

In some embodiments, masking methods can be mixed. In such embodiments, the mapping table can contain different masking methods, e.g. a branch can be renamed with substitution, and another branch can be hashed. A mix method is represented in Table 9.

**Table 9: masked branch name with mixed methods**

| **Split Point** | **Original branch name** | **Renaming/ Masking method** | **Hash method** | **Renamed/ Masked branch name** |
|---|---|---|---|---|
| 100 | /blocks/blocks.4/blocks.4.2/ conv_dw/Conv_output_0 | Substitution | N/A | Branch_A |
| | /blocks/blocks.4/blocks.4.1/ Add_output_0 | Hashing | md5sum | fbf83631abe84a1120bb Sba64b167490 |

Intermediate data will be sent with "Mapping usage information"=1 (renamed/Masked branch only).

### Transmission format

In different embodiments, mapping tables may be sent in different formats. In some embodiments, complete or partial mapping tables may be transmitted as json file or a txt file, among other examples. In the following example, the mapping table is in a json format.

```
{
     "partial mapping table": {
         "split point": "100" [
             {
                  "original branch name":
                  "/blocks/blocks.4/blocks.4.2/conv_dw/Conv_output 0",
                  "tensor dimension": [1,672,14,14],
         "tensor data type": float32,
         "tensor compression algorithm": "FCM high 5.1",
                  "method": "substitution",
         "masked branch name": "branch_A"
             },
             {
                  "original branch name":
                  "/blocks/blocks.4/blocks.4.1/Add_output 0",
                  "tensor dimension": [1,112,14,14],
         "tensor data type": float32,
         "tensor compression algorithm": "FCM high 5.1",
         "method": "substitution",
         "masked branch name": "branch_B"
             }
         ]
    }
 }
```

In the following example, the mapping table is in a text format.

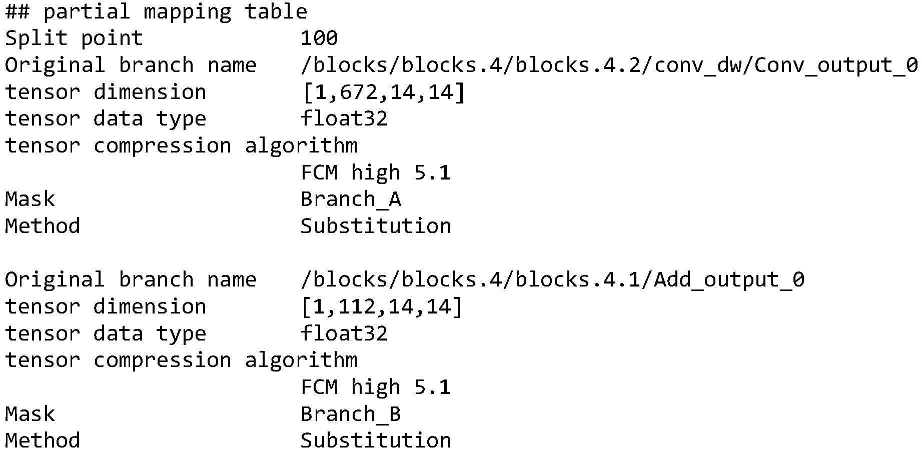

### Intermediate data information for split AI/ML operations

Some embodiments may be implemented in the context of 3GPP, for example using the split AI/ML operations described in 3GPP SA4 26.927 v0.90: Study on Artificial Intelligence (Al) and Machine Learning (ML) for Media. In that document, clause 6.6.4 describes intermediate data information for split AI/ML operations. The implementation of some embodiments of the present disclosure may include modifying the described information to further include the following.

| | | | |
|---|---|---|---|
| | **Mapping table** | Mapping table. Required to decode renamed/masked tensor name | Mapping_table_0 |
| | **Mapping usage information** | Signal whether a mapping table is required to decode the tensor name | 0,1,2 (cf Table 1) |

The row with Tensor Name may be updated as follows:

| | | | | |
|---|---|---|---|---|
| | | **Tensor name** | The original or masked name of the tensor | Tensor1 |

Intermediate data information identifies the structure of intermediate data output from a first endpoint that are to be retrieved to feed the inference of the second endpoint after transmission of the intermediate data over the network. An updated description of the metadata as used in some embodiments may be described as follows.

The tensor identification may have any of a variety of different formats. For example, a tensor identifier can be a name, a numerical index that can be extracted from a list or a tensor index table or a hash value, among other options.

A tensor type may be used to identify from which mean the tensor is identified, either by an index of table or of a list, by a name, by hash value, for example.

The list or the tensor index tables as well as the identifier type may be negotiated and exchanged between split endpoints during the configuration stage.

| **Metadata category** | **Metadata type** | **Description** | **Metadata type description (Examples)** | |
|---|---|---|---|---|
| **intermediate data general information** | **Tensor structure framework** | The exact underlying tensor structure of the intermediate data tensors including the exact version of it. | PyTorch 2.0, TensorFlow v2.13.0, NumPy v1 .25 | |
| | **Data direction** | This defines the direction of transmitted data, either uplink (from UE endpoint to network endpoint) or downlink (From a network endpoint to the UE endpoint). | Upstream, Downstream | |
| | | This information may be useful to configure an intermediate data delivery session | | |
| | **Global compression algorithm** | Identifies a compression algorithm that can be applied to all the intermediate data tensors. For example, when the connectivity condition between the UE and the network is insufficient to transmit the original intermediate data, a compression algorithm may be applied. | NONE, FCM, SNAPPY, ... | |
| | **Mapping table** | Mapping table. Required to decode renamed/masked tensor name. The mapping table comprises Renaming/Masking method type (substitution, hashing), the original branch name and the renamed/masked branch name. | Mapping_table_0[], Mapping_table_1[], Mapping_table_2[] | |
| | **mapping table identifier** | The unique identifier of a table of tensor that maps the tensor identifier with the original tensor name. This information is transmitted with the mapping table. | Mapping_table_0 | |
| | | When several mapping tables are exchanged or configured, an endpoint may notify the identifier of the table to be used among the already configured/stored tables. | | |
| | **Tensor identifier type** | | The type of the tensor identifier. | Name, Index, Hash |
| | **Mapping usage information** | | Signal whether a mapping table is required to decode the tensor name and for which usage, meaning mapping branch name only or branch name with tensor metadata. | 0,1,2 (see Table 1) |
| **intermediate data tensor information** | **Tensor list** | | List of Tensors that composed the intermediate data | [tensor1, tensor2, tensor3, tensor4] |
| | | Tensor identifier | A unique identifier for the tensor. The identifier may be a name, an index of a tensor list or table, a combination thereof, a hash value. | Tensor1 Index=10 |
| | | Tensor shape | Tensor shape is a tuple of positive integers, where the size of the tuple represents the dimension of the tensor, and each value represents the size in each dimension. | [1,64,64,64]. |
| | | Tensor data type | The data type of each intermediate data tensor | Float32, int32 |
| | | Tensor compression algorithm | Identifies the compression algorithm(s) that can be applied to a particular tensor. The tensor compression algorithm supersedes the global compression algorithm when both are defined | NONE, FCM, SNAPPY, ... |

Example embodiments allow two endpoints to transmit intermediate data even if their respective branch naming is different.

### Example systems

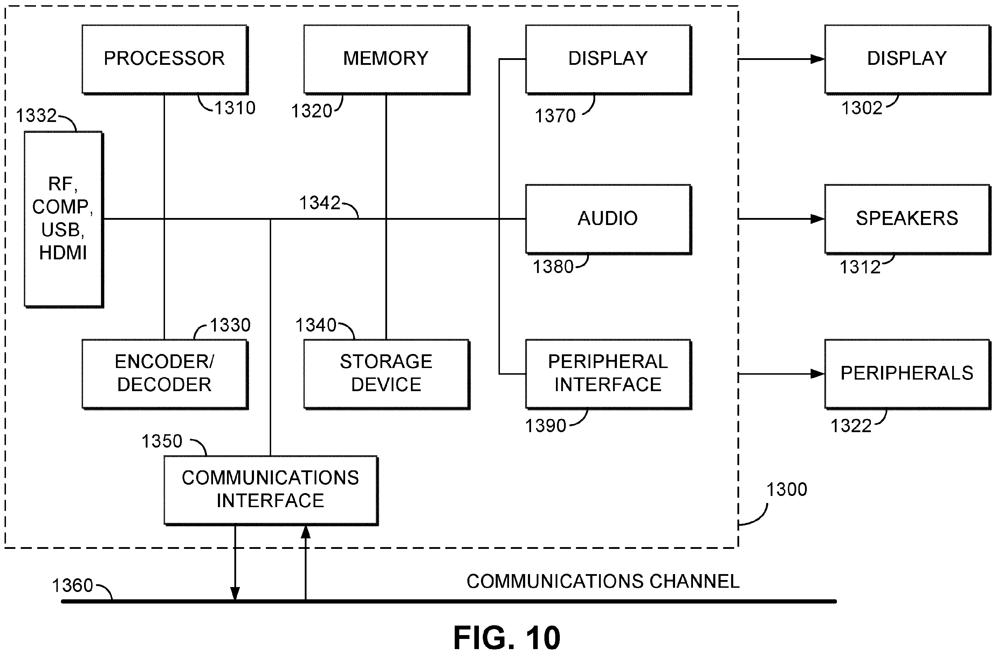

Some embodiments may be implemented on a system of one or more processors as illustrated in FIG. 10. FIG. 10 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further embodiments

A method according to some embodiments comprises: obtaining information describing a graph structure of a machine learning, ML, model, wherein the ML model has a plurality of nodes, each node having an output of at least one tensor, each tensor having an original branch name; obtaining information indicating a split of the ML model into at least a first sub-model and a second sub-model, each of the nodes being in one of the sub-models; for at least a first one of the tensors, the first tensor being an output of a node in the first sub-model, sending, to a second endpoint, information associating the original branch name of the first tensor with a replacement branch name; running the first sub-model to obtain the first tensor; and sending the first tensor to the second endpoint, wherein the first tensor is identified by the replacement branch name.

An apparatus according to some embodiments comprises one or more processors configured to perform at least: obtaining information describing a graph structure of a machine learning, ML, model, wherein the ML model has a plurality of nodes, each node having an output of at least one tensor, each tensor having an original branch name; obtaining information indicating a split of the ML model into at least a first sub-model and a second sub-model, each of the nodes being in one of the sub-models; for at least a first one of the tensors, the first tensor being an output of a node in the first sub-model, sending, to a second endpoint, information associating the original branch name of the first tensor with a replacement branch name; running the first sub-model to obtain the first tensor; and sending the first tensor to the second endpoint, wherein the first tensor is identified by the replacement branch name.

Some embodiments further comprise, at the first endpoint, assigning the replacement branch name to the first tensor by substituting a string or an index for the original branch name.

Some embodiments further comprise, at the first endpoint, assigning the replacement branch name to the first tensors by performing a hash of the original branch name.

In some embodiments, the information associating the original branch name of the first node with a replacement branch name comprises a table associating a plurality of original branch names with respective replacement branch names.

In some embodiments, the table further includes tensor metadata including a data type or a tensor dimension for each of the tensors.

In some embodiments, the table identifies a renaming method of each of the tensors.

In some embodiments, the table associates all tensors of the ML model with a respective replacement branch name.

A method according to some embodiments comprises: obtaining information describing a graph structure of a machine learning, ML, model, wherein the ML model has a plurality of nodes, each node having an input of at least one tensor, each tensor having an original branch name; obtaining information indicating a split of the ML model into at least a first sub-model and a second sub-model, each of the nodes being in one of the sub-models; receiving, from a first endpoint, information associating at least one original branch name with a replacement branch name, the original branch name identifying an input to a node in the second sub-model; receiving a first tensor from the first endpoint, wherein the first tensor is identified by the replacement branch name; and running the second sub-model using the first tensor as an input to the node associated with the original branch name.

An apparatus according to some embodiments comprises one or more processors configured to perform at least: obtaining information describing a graph structure of a machine learning, ML, model, wherein the ML model has a plurality of nodes, each node having an input of at least one tensor, each tensor having an original branch name; obtaining information indicating a split of the ML model into at least a first sub-model and a second sub-model, each of the nodes being in one of the sub-models; receiving, from a first endpoint, information associating at least one original branch name with a replacement branch name, the original branch name identifying an input to a node in the second sub-model; receiving a first tensor from the first endpoint, wherein the first tensor is identified by the replacement branch name; and running the second sub-model using the first tensor as an input to the node associated with the original branch name.

Some embodiments further comprise decoding the replacement branch name to obtain the original branch name, wherein using the first tensor comprises routing the first tensor to the node associated with the original branch name.

In some embodiments, the replacement branch name is a hash of the original branch name, further comprising performing a hash of the original branch name to check the validity of the replacement branch name.

In some embodiments, the information associating the original branch name of the first node with a replacement branch name comprises a table associating a plurality of original branch names with respective replacement branch names.

In some embodiments, the table further includes tensor metadata including a data type or a tensor dimension for each of the tensors.

In some embodiments, the table identifies a renaming method of each of the tensors.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining information describing a graph structure of a machine learning, ML, model, wherein the ML model has a plurality of nodes, each node having an output of at least one tensor, each tensor having an original branch name;
obtaining information indicating a split of the ML model into at least a first sub-model and a second sub-model, each of the nodes being in one of the sub-models;
for at least a first one of the tensors, the first tensor being an output of a node in the first sub-model, sending, to a second endpoint, information associating the original branch name of the first tensor with a replacement branch name;
running the first sub-model to obtain the first tensor; and
sending the first tensor to the second endpoint, wherein the first tensor is identified by the replacement branch name.

2. An apparatus comprising one or more processors configured to perform at least:
obtaining information describing a graph structure of a machine learning, ML, model, wherein the ML model has a plurality of nodes, each node having an output of at least one tensor, each tensor having an original branch name;
obtaining information indicating a split of the ML model into at least a first sub-model and a second sub-model, each of the nodes being in one of the sub-models;
for at least a first one of the tensors, the first tensor being an output of a node in the first sub-model, sending, to a second endpoint, information associating the original branch name of the first tensor with a replacement branch name;
running the first sub-model to obtain the first tensor; and
sending the first tensor to the second endpoint, wherein the first tensor is identified by the replacement branch name.

3. The method of claim 1 or the apparatus of claim 2, further comprising, at the first endpoint, assigning the replacement branch name to the first tensor by substituting a string or an index for the original branch name.

4. The method of claim 1 or the apparatus of claim 2, further comprising, at the first endpoint, assigning the replacement branch name to the first tensors by performing a hash of the original branch name.

5. The method of claim 1, or claims 3-4 as they depend from claim 1, or the apparatus of claim 2, or claims 3-4 as they depend from claim 2, wherein the information associating the original branch name of the first node with a replacement branch name comprises a table associating a plurality of original branch names with respective replacement branch names.

6. The method of claim 5 as it depends from claim 1, or the apparatus of claim 5 as it depends from claim 2, wherein the table further includes tensor metadata including a data type or a tensor dimension for each of the tensors.

7. The method of claim 5 as it depends from claim 1, or the apparatus of claim 5 as it depends from claim 2, wherein the table identifies a renaming method of each of the tensors.

8. The method of claim 5 as it depends from claim 1, or the apparatus of claim 5 as it depends from claim 2, wherein the table associates all tensors of the ML model with a respective replacement branch name.

9. A method comprising:
obtaining information describing a graph structure of a machine learning, ML, model, wherein the ML model has a plurality of nodes, each node having an input of at least one tensor, each tensor having an original branch name;
obtaining information indicating a split of the ML model into at least a first sub-model and a second sub-model, each of the nodes being in one of the sub-models;
receiving, from a first endpoint, information associating at least one original branch name with a replacement branch name, the original branch name identifying an input to a node in the second sub-model;
receiving a first tensor from the first endpoint, wherein the first tensor is identified by the replacement branch name; and
running the second sub-model using the first tensor as an input to the node associated with the original branch name.

10. An apparatus comprising one or more processors configured to perform at least:
obtaining information describing a graph structure of a machine learning, ML, model, wherein the ML model has a plurality of nodes, each node having an input of at least one tensor, each tensor having an original branch name;
obtaining information indicating a split of the ML model into at least a first sub-model and a second sub-model, each of the nodes being in one of the sub-models;
receiving, from a first endpoint, information associating at least one original branch name with a replacement branch name, the original branch name identifying an input to a node in the second sub-model;
receiving a first tensor from the first endpoint, wherein the first tensor is identified by the replacement branch name; and
running the second sub-model using the first tensor as an input to the node associated with the original branch name.

11. The method of claim 9, or the apparatus of claim 10, further comprising decoding the replacement branch name to obtain the original branch name, wherein using the first tensor comprises routing the first tensor to the node associated with the original branch name.

12. The method of claim 9, or claim 11 as it depends from claim 9, or the apparatus of claim 10, or claim 11 as it depends from claim 10, wherein the replacement branch name is a hash of the original branch name, further comprising performing a hash of the original branch name to check the validity of the replacement branch name.

13. The method of claim 9, or claims 11-12 as they depend from claim 9, or the apparatus of claim 10, or claims 11-12 as they depend from claim 10, wherein the information associating the original branch name of the first node with a replacement branch name comprises a table associating a plurality of original branch names with respective replacement branch names.

14. The method of claim 13 as it depends from claim 9, or the apparatus of claim 13 as it depends from claim 10, wherein the table further includes tensor metadata including a data type or a tensor dimension for each of the tensors.

15. The method of claim 13 as it depends from claim 9, or the apparatus of claim 13 as it depends from claim 10, wherein the table identifies a renaming method of each of the tensors.
